# EUROPEAN PATENT APPLICATION

(11) **EP 4 404 077 A1**
(43) Date of publication of application: **24.07.2024**
(21) Application number: 23152491.9
(22) Date of filing: 19.01.2023
(51) Int. Cl.: G06F 16/2453

(54) **METHOD AND SYSTEM FOR OPERATING A QUERY PROCESSING ENGINE**

(71) Applicant: MasterCard International Incorporated, Purchase NY New York 10577-2509 (US)
(72) Inventor: KUSHWAHA, Jitendra Shambhoo, Sligo, F91X56K (IE); KAUSHIK, Sanchit, 411027 Pune (IN)
(74) Representative: Murgitroyd & Company

(57) **Abstract**

Method for operating a query processing engine, comprising the steps of:
- identifying for the query processing engine query related performance criteria that can reduce the efficiency of the query processing engine,
- creating a look up table listing the identified efficiency reducing query related performance criteria,
- entering a first query in the query processing engine,
- evaluating the first query to identify query related performance criteria of the first query,
- comparing the identified query related performance criteria of the first query with the entries in the look up table, and
- terminating the first query if the first query reproduces one or more efficiency reducing query related performance criteria as listed in the look up table.

## Description

### Field of the invention

The disclosure relates to the use of query processing engines, and in particular to allowing a query processing engine to work efficiently, irrespective of the queries and in particular the quality of the queries that presented to the query processing engine.

### Background of the invention

Query processing engines are known in the prior art and are normally used for running queries in large volumes of data.

Different commercially available query processing engines all have their specific weaknesses and strengths, but the main characteristic of any query processing engine is the possibility to use a query in the large volume of data to obtain a useful result comprising a determined selection of data. The end result of the query will allow a user to analyse the selection of data and to thereby create valuable information for the user.

A problem related to query processing engines is that on the one hand, the query processing engine provides a valuable tool, on the other end the operation and maintenance of a query processing engine is relatively expensive.

In order to provide benefits for an organisation, the query processing engine should be used by a relatively large group of individual users to justify the investment in the operation and maintenance of the query processing engine.

A problem related to query processing engines is the fact that specific types of queries could, in view of the nature of the specific queries, create inefficiencies in the processing of queries. For instance, a query may oblige the query processing engine to allocate a large part of the memory a specific query. If the amount of memory needed for the single query exceeds a threshold value, all other queries that are being processed will be slowed down or stopped. This means that the specific query has compromised the efficiency of the entire query processing engine. In view of their specific nature and the amount of data required for a specific query, some queries may even bring the query processing engine down, thereby generating important delays during the operation of the query processing engine and the processing of queries that the query processing engine should complete.

To avoid inefficient queries to be entered into the query processing engine, a possible solution is to only give the authority of entering queries to one or more administrators who review and possibly amend queries before the queries are allowed to be entered into the query processing engine. This solution would ensure that the administrators filter the queries and allow only queries that appear to meet certain efficiency standards would be entered into the system.

An alternative would be to train all users of the query processing engine to a certain level of understanding of the functioning of the query processing engine. This again to allow individual users to only create queries that can be efficiently processed.

It will be understood that each of the solutions mentioned above will create an important restriction on the use of the query processing engine, since only highly trained users could get access to using the query processing engine. Moreover, despite the level of training the above-mentioned solutions would still not provide any embedded safety in the query processing engine to avoid that inefficient queries compromise the efficiency of the query processing engine. Despite a high level of training, individual users could still create and enter queries that could hamper efficient processing of data by the query processing engine.

In view of the shortcomings and technical problems linked to the use of query processing engines according to the prior art, it is an objective of the disclosure to provide a query processing engine which can be used by individual users, comprising an embedded application to identify queries that are inefficient, to allow inefficient queries to be recognised and to be able to kill such inefficient queries.

### Objects of the invention

According to a first aspect, the disclosure relates to a method for operating a query processing engine, comprising the steps of:
- identifying for the query processing engine query related performance criteria that can reduce the efficiency of the query processing engine,
- creating a look up table listing the identified efficiency reducing query related performance criteria,
- entering a first query in the query processing engine,
- evaluating the first query to identify query related performance criteria of the first query,
- comparing the identified query related performance criteria of the first query with the entries in the look up table, and
- terminating the first query if the first query reproduces one or more efficiency reducing query related performance criteria as listed in the look up table.

According to an embodiment the step of evaluating the first query to identify query related performance criteria of the first query, comprises:
- dynamically evaluating at least one performance criterion for the first query during execution of at least a portion of said first query,

According to an embodiment of the invention, the look up table comprises as entry a threshold value for the maximum memory that can be allocated to a single query.

In addition or as alternative the look up table comprises a threshold value for the maximum amount of records that can be fetched by a single query.

In addition or as alternative the look up table comprises a threshold value for the duration that a single query can be running.

In addition or as alternative the look up table comprises performing cross join.

According to an embodiment, the method further comprises:
- identifying the identity of a first user entering the first query in the query processing engine, and in case the first query is terminated,
- sending a message to the first user to inform the first user of the termination of the first query.

Optionally the message to the first user is sent by means of an email message.

Optionally the message to the first user comprises one or more suggestions to amend the first query to avoid one or more efficiency reducing query related performance criteria.

According to a second aspect, the disclosure relates to a data processing system comprising a processor configured to perform the method of the disclosure.

According to a third aspect, the disclosure relates to a computer program product comprising instructions which, when the program is executed by a computer, cause the computer to carry out the method of the disclosure.

According to a fourth aspect, the disclosure relates to a computer-readable storage medium comprising instructions which, when executed by a computer, cause the computer to carry out the method of the disclosure.

### Brief description of the drawings

Figure 1 shows a flow chart identifying the different steps of the method of the disclosure and
Figure 2 shows a flow chart of a further embodiment of the disclosure.

### Detailed description of the drawings

In the context of this description, the term query processing engine is used. This term refers to a software that recognizes and interprets commands to access a relational database and interrogate data. In the prior art, a query processing engine is often referred to as a SQL engine, a SQL database engine or a SQL query engine.

In order for users of a query processing engine to interact with a relational Data Base Management System (DBMSD), they should produce request in a valid query database language, which is translated into an appropriate request before the query processing engine can process it.

To retrieve data, a query processing engine accepts, parses, and executes commands for the data warehouse to forward to an application server.

The query processing engine processes data in stages. One of the stages comprises collecting data. A further stage comprises query evaluation. In this further step, the specific query characteristics of the query can be reviewed.

According to the disclosure, during the processing of, for instance, a first query, the first query is evaluated to identify query related performance criteria of the first query. This evaluation is done, for instance, by dynamically reviewing at least one performance criterion for said first query during execution of at least a portion of the query.

The step of query evaluation and the step of evaluation of at least one performance criterion are important in view of assessing the efficiency with which the query can be processed.

In the present disclosure, the term 'query efficiency' is used to refer to the overall capacity and time needed for a single query to be processed and completed. A query processing engine is normally a very complex piece of software which is expensive to operate and maintain. Moreover, in an organisation exploiting a query processing engine, in general, a large number of users have access to the query processing engine. This means that in practise, a large number of queries will be processed simultaneously by the query processing engine. If a single query is using too much capacity, for instance a too large part of the available memory, or is taking too long to process, the single query may create a delay for the processing for all the other queries that are being processed and a single, inefficient query may even bring the query processing engine down.

To protect the query processing engine and to make sure that the query processing engine is functioning properly at all times, according to the disclosure, the query processing engine is provided with an application to evaluate the effect of the processing of each individual query on the general performance of the query processing engine and on the overall efficiency with which the engine can process and complete queries.

In the operation of the application according to the disclosure, in a first step, the query processing engine will be assessed to identify for the query processing engine, query related performance criteria that can reduce the efficiency of the query processing engine.

Once the query related performance criteria that can reduce the efficiency of the query processing engine have been identified, these performance criteria are entered into a table that can later be used as look up table to compare the performance criteria of each individual query that is to be processed by the query processing engine with the performance criteria in the look up table that have been identified as being inefficient.

Each query processing engine, will have its own, specific characteristics which make that the efficiency of operating the engine will be particularly sensitive for a particular query characteristics. One of these query characteristics may be the use of cross join. In case during the step of query evaluation, it is established that the query is using cross join, the query is identified as being inefficient and can be stopped.

Another query characteristics that risks to comprise the efficiency of the query processing engine includes the fact that the query is fetching more data than needed. An example of this is the query fetching more rows than needed.

Other examples of query characteristics that comprise the efficiency include memory override, denorm usage and the running of compute stats queries.

The look up table may also comprise as entry a threshold value for the maximum memory that can be allocated to a single query.

The look up table may also comprise as entry a threshold value for the maximum amount of records that can be fetched be a single query.

Further the look up table may comprise as entry a threshold value for the duration that a single query can be running.

In a subsequent step, the application of the present disclosure will perform, for each individual query, an evaluation to identify query related performance criteria for each query.

In yet a further step, the identified query related performance criteria are compared with the entries in the look up table.

In case, it is confirmed that a specific query comprises at least one query related characteristics which is listed in the look up table and which compromises the efficiency of the query processing engine, the query is identified as being inefficient and the running of the query is stopped.

The fact that inefficient queries can be identified as such and the fact that the running of inefficient queries can be stopped, provides an important protection for the query processing engine to safeguard the efficient running of said engine. Individual queries, which appear to be inefficient, are terminated, to allow the query processing engine to efficiently process all other queries which are being processed.

According to the disclosure the step of evaluating the first query to identify query related performance criteria of the first query, comprises dynamically evaluating at least one performance criterion for the first query during execution of at least a portion of said first query.

That means that once a query is received and the query processing engine starts processing the query, at least one performance criterion is dynamically evaluated during execution of at least a portion of the query. One of the performance criteria that is dynamically evaluated is the running time of the query. For instance, if the running time exceeds an expected running time, the query can be identified as being inefficient and the running of the query can be stopped.

According to the disclosure, once the running of a query is stopped for inefficiency of the query, a message is sent to the creator of the query, or owner of the query. This message could have the form of an email. With this message the owner of the query is informed of the fact that the query has been identified as being inefficient and for that reason is stopped. According to an embodiment of the disclosure the message could further comprise suggestions to restructure the query.

To be able to send a message to the user that created a query, during the steps of creating of a query and/or submitting a query, the identity of the creator should be identified and stored.

The suggestions to the creator of a query that has been terminated, could comprise suggestions on how a query could be rewritten to find in an alternative manner the same results as originally intended. However, it is also possible to rewrite a query to retrieve different results, if that provides an efficiency benefit.

One important question that should be asked to the creator of a query that should rewrite a query, is whether it would be preferable to break up a complex query into a number of simpler queries. The traditional approach to database design emphasizes doing as much work as possible with as few queries as possible. This approach was historically better because of the cost of network communication and the overhead of the query parsing and optimization stages.

However, today it is very well possible that a query processing engine can very efficiently respond to a number of small and simple queries very quickly. Modern networks are also significantly faster than they used to be, reducing network latency. Typically, larger query processing engines can process 10,000ths of simple queries per second on commodity server hardware and even thousands of queries per second from a single correspondent on a Gigabit network. This means that, depending on the characteristic of the query processing engine, running multiple queries might be a good solution.

Another way to slice up a query is to divide and conquer, keeping it essentially the same but running it in smaller "chunks" that affect fewer rows each time.

Purging old data is a great example. Periodic purge jobs may need to remove quite a bit of data, and doing this in one massive query could lock a lot of rows for a long time, fill up transaction logs, hog resources, and block small queries that shouldn't be interrupted. Chopping up the DELETE statement and using medium-size queries can improve performance considerably, and reduce replication lag when a query is replicated.

A further suggestion to improve the efficiency of a query is to use join decomposition. A user can decompose a join by running multiple single-table queries instead of a multitable join, and then performing the join in the application.

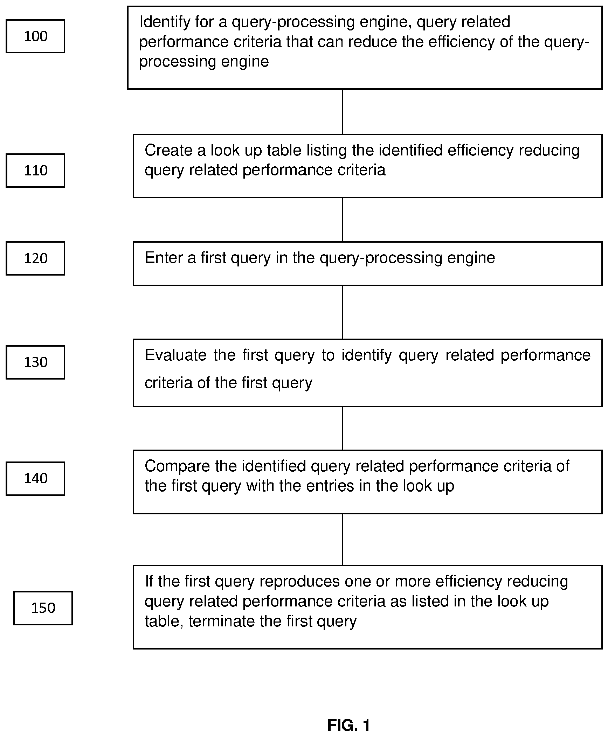

Figure 1 shows a flow chart of the steps of the method according to the disclosure.

In a first step 100, for a query processing engine, query related performance criteria that can reduce the efficiency of the query processing engine are identified.

In a subsequent step, 110 a look up table is created, listing the identified efficiency reducing query related performance criteria for the query processing engine.

In yet a further step 120 a first query is entered in the query processing engine.

In the following step 130, the first query is evaluated to identify query related performance criteria of the first query.

In a subsequent step 140, the identified query related performance criteria of the first query are compared with the entries in the look up.

If there is a match between the identified query related performance criteria of the first query and the entries in the look up table, it can be concluded in yet a further step 150 that the first query reproduces one or more efficiency reducing query related performance criteria as listed in the look up table. In that case, to protect the overall functioning of the query processing engine, the first query is terminated.

### Example

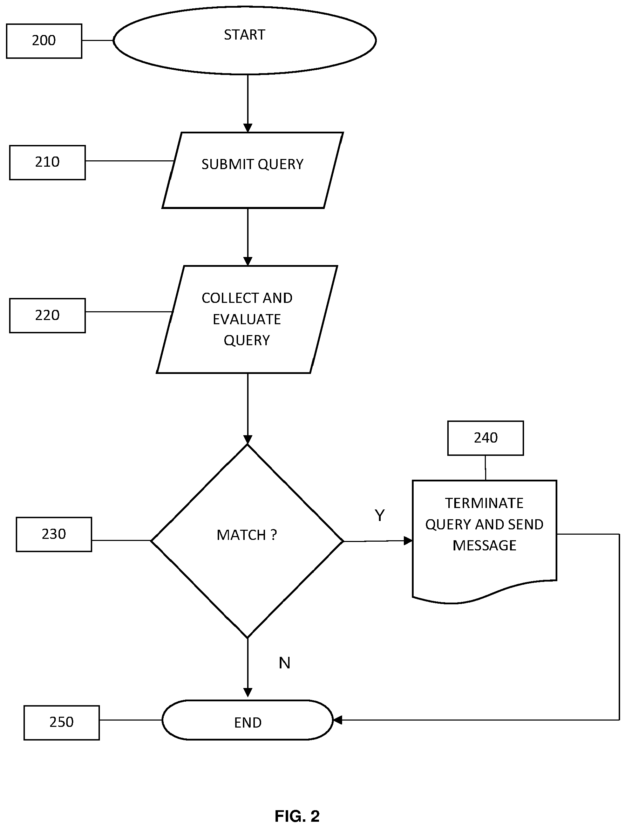

With reference to figure 2, a possible operation of the method to operate a query processing engine according to the disclosure is described.

In a first step 200 the processing of first query is started. This first step can comprise the designing of a query or the re-writing of a query that was earlier terminated in view of inefficiency.

In a second step 210, the first query is submitted in the query processing engine. This second step 210 is where the user submits the query either via Command Prompt, HUE (Hadoop User Experience) or via ODBC, for instance.

In a subsequent step 220, the data needed for the query will be collected. In this step API is used to fetch all the required data.

In this second step 220, or subsequent to this step, the query is evaluated. This means that the plan of the query is reviewed and the required information, like Table Name, Memory, Join, Scan, Exchange, Write, Stream, etc, is gathered.

According to an option, not shown in figure 2, it could be reviewed what the status is of the query processing engine by reviewing the query to assess whether the engine is down or not.

The assessment of the query, specific query related performance criteria can be checked, like memory override, (this means if the job is expecting more memory, than expected), the amount of rows fetched to check whether a certain threshold is exceeded (for instance if a query is fetching more than 100000000 records).

Other query related performance criteria will also be reviewed, like denorm usage (if the users are using the denorm tables), compute stats query (if the users are running compute stats query).

The next step 230 in the procedure is the comparison between the identified performance criteria of a query and the query related performance criteria as listed in the look up table. In case it is confirmed that there is a match between the query related performance criteria and the performance criteria as listed in the look up table, the query is identified as being inefficient and the query is terminated or killed in step 240.

Step 240 is followed by informing the creator or owner of the query of the fact that the query has been terminated. As mentioned above, this message could comprise suggestions to improve the efficiency of the query. With the sending of the message, the processing of the query is ended, as shown in step 150.

In case there is no match between the identified performance criteria of a query and the query related performance criteria as listed in the look up table, the query is completed and the completing ends the processing of the query in step 250.

## Claims

1. Method for operating a query processing engine, comprising the steps of:
- identifying for the query processing engine query related performance criteria that can reduce the efficiency of the query processing engine,
- creating a look up table listing the identified efficiency reducing query related performance criteria,
- entering a first query in the query processing engine,
- evaluating the first query to identify query related performance criteria of the first query,
- comparing the identified query related performance criteria of the first query with the entries in the look up table, and
- terminating the first query if the first query reproduces one or more efficiency reducing query related performance criteria as listed in the look up table.

2. Method according to claim 1, wherein the step of evaluating the first query to identify query related performance criteria of the first query, comprises:
- dynamically evaluating at least one performance criterion for the first query during execution of at least a portion of said first query,

3. Method according to claim 1 or 2, wherein the review table comprises as entry:
- a threshold value for the maximum memory that can be allocated to a single query.

4. Method according to claim 1 or 2, wherein the look up table comprises as entry:
- a threshold value for the maximum amount of records that can be fetched by a single query.

5. Method according to claim 1, 2, 3 or 4, wherein the look up table comprises as entry:
- a threshold value for the duration that a single query can be running.

6. Method according to any of the preceding claims, wherein the look up table comprises as entry:
- performing cross join.

7. Method according to any of the preceding claims, further comprising:
- identifying the identity of a first user entering the first query in the query processing engine, and in case the first query is terminated,
- sending a message to the first user to inform the first user of the termination of the first query.

8. Method according to claim 7, wherein the message to the first user is sent by means of an email message.

9. Method according to claim 7 or 8, wherein the message to the first user comprises one or more suggestions to amend the first query to avoid one or more efficiency reducing query related performance criteria.

10. A data processing system comprising a processor configured to perform the method of any of claims 1 to 9.

11. A computer program product comprising instructions which, when the program is executed by a computer, cause the computer to carry out the method of any of claims 1 to 9.

12. A computer-readable storage medium comprising instructions which, when executed by a computer, cause the computer to carry out the method of any of claims 1 to 9.
